# EUROPÄISCHE PATENTANMELDUNG

(11) **EP 4 064 637 A1**
(43) Veröffentlichungstag der Anmeldung: **28.09.2022**
(21) Anmeldenummer: 21164533.8
(22) Anmeldetag: 24.03.2021
(51) Int. Cl.: H04L 29/08, H04L 12/24

(54) **VERFAHREN UND VORRICHTUNG ZUR KONFIGURATION EINER APPLIKATION**

(71) Anmelder: Siemens Aktiengesellschaft, 80333 München (DE)
(72) Erfinder: Albrecht, Harald, 90475 Nürnberg (DE); Höme, Stephan, 91126 Schwabach (DE)

(57) **Zusammenfassung**

Wenn eine TSN-Applikation in Container in gleicher Weise wie in Virtuellen Maschinen (VM) verpackt wird muss jeder einzelne TSN-Applikations-Container einen vollständigen TSN-Endgeräte-Stack mitbringen. Zudem muss der Container-Host bei Industrial Edge mit dem aufwändigeren TSN-Stack für Vermittlungsstellen (Switches) ausgestattet werden. Der Container-Host muss außerdem als Netzwerk-Infrastrukturgerät verwaltet werden.

Applikations-Entwickler wollen nur die unbedingt zwingend erforderliche TSN-Software in ihre Container-Applikationen integrieren und pflegen müssen, nicht jedoch komplette TSN-Geräte-Stacks. Zugleich müssen ihre TSN-Applikations-Container jederzeit dynamisch (ad-hoc) TSN-Streams vom Netzwerk anfordern können, dafür benötigen sie Topologie-Informationen vom Edge-Gerät (wie den oder die Gerätezugangspunkt(e) zu TSN-Netz(en)) in möglichst einfacher Weise.
Das erfindungsgemäße Verfahren und die zugehörige Vorrichtung bieten eine Möglichkeit an, das oben beschriebene Problem zu lösen, indem die benötigten Informationen und Adressen-Tupel dem Container nach Installation bereit gestellt werden und diese nicht bereits bei der Entwicklung bekannt sein mössen.

## Beschreibung

Die optimale Nutzung von Daten wird für die Industrie immer wichtiger. Viele Unternehmen haben das bereits erkannt und analysieren mit Hilfe eigener Software Daten aus Maschinen und Anlagen auf Industrie-PCs. Das bringt wertvolle Erkenntnisse, ist aber aufwendig und erfordert häufige manuelle Eingriffe, damit Software, Betriebssystem und Datensicherheit immer auf dem neuesten Stand sind.

Time-Sensitive Networking (TSN) bezeichnet eine Reihe von Standards, an denen die Time-Sensitive Networking Task Group (IEEE 802.1) arbeitet. Die sich in der Standardisierung befindlichen Standards definieren Mechanismen zur Übertragung von Daten über Ethernet-Netze. Ein Großteil der Projekte definiert dabei Erweiterungen des Bridging-Standards IEEE 802.1Q. Diese Erweiterungen adressieren vor allem die Übertragung mit sehr geringer Übertragungslatenz und hoher Verfügbarkeit. Ein wichtiger Anwendungsbereich sind Echtzeit-Kontrollstreams, die z. B. im Automobil, in modernen Flugzeugen oder in Industrieanlagen zur Steuerung verwendet werden.

Mit der Verwendung von Industrial Edge funktioniert die optimale Datennutzung im Feld (also der Industrie-Anlage) einfacher, flexibler und sicherer. Das Erfassen und Verarbeiten von Daten geschieht direkt und abgesichert an der Maschine, für Verwaltung, Bereitstellung von Software und deren Aktualisierungen steht ein zentrales System zur Verfügung. Ein Industrial Edge Management System ist die zentrale Infrastruktur, mit der alle verbundenen Edge-Geräte jeder Art verwaltet werden. Anstatt Updates und Security-Patches auf jedem Gerät einzeln aufspielen zu müssen, wird alles zentral von einem System aus gesteuert, das je nach Bedarf vor Ort oder in der Cloud installiert sein kann.

Auf den Edge-Geräten kann beispielsweise (aber nicht ausschließlich) zum Erzeugen und Verwalten der Container die bekannte Open Source Software "Docker" verwendet werden, die dank Containervisualisierung zahlreiche Vorteile aufweist, wie geringer Ressourcenbedarf, schnelle Bereitstellung und einfache Handhabung bietet. Neue Applikationen können in beliebigen Hochsprachen entwickelt werden (C/C++, Java, Python, Node.js), als Docker-Image virtualisiert und skalierbar auf allen Edge Geräten ablaufen lassen.

Benötigt wird dafür eine passende Laufzeitumgebung (runtime environment), die zur Laufzeit der Computerprogramme die verfügbaren und festgelegten Voraussetzungen des Laufzeitsystems (runtime system) definiert. Dieses ist durch die elementaren Bestandteile der Programmiersprache wie das Verhalten von Sprachkonstrukten und weitere Funktionen wie Typprüfung, Debugging, Codegenerierung und -optimierung definiert. Zur Laufzeitumgebung gehören weiterhin Laufzeitbibliothek, Standardbibliotheken, Programmierschnittstellen, Laufzeitvariablen sowie auf Hard- und Softwarekomponenten über Betriebssystemfunktionen.

Die Industrial Edge ist durch ihre Platzierung direkt in Automatisierungsanlagen zukünftig auch eine attraktive Plattform für TSN-fähige Industrial Edge Applikationen, um beispielsweise Steuerungs- und Maschinendaten über ein Kommunikationsnetz (beispielsweise OPC UA PubSub TSN) mit einer garantierten Übertragungsqualität ("Quality of Service", QoS) zu erhalten und weiter zu verarbeiten.

Keine andere Technologie hat die IT in den letzten Jahren so geprägt wie die Container-Technologie. Ein sogenannter Container fungiert dabei als Behälter für Anwendungen, auch Applikationen genannt, einschließlich benötigter Komponenten wie Frameworks oder Bibliotheken. Ähnlich wie bei der bekannten Virtualisierung von verschiedenen Betriebssystemen auf einem Server virtualisieren Container Anwendungen, die jeweils nichts voneinander wissen. Alle virtualisierten Anwendungen laufen unter demselben Host-Betriebssystem - das spart gegenüber der klassischen Virtualisierung ganzer Betriebssysteme Daten-Mehraufwand (Overhead).

Die Bereitstellung von Anwendungen wird durch die Verwendung der Container Technologie vereinfacht, weil sich Container, die alle nötigen Informationen enthalten, leicht als Dateien transportieren und installieren lassen. Container gewährleisten die Trennung und Verwaltung der auf einem Rechner genutzten Ressourcen. Eine Container-Engine ist dabei ein Stück Software, das Benutzeranfragen, einschließlich Kommandozeilenoptionen, annimmt, Images abruft und aus Sicht des Endbenutzers den Container ausführt.

Bislang wird davon ausgegangen, dass eine TSN-Applikation in Container in gleicher Weise wie in Virtuellen Maschinen (VM) verpackt werden. Dabei muss aber jeder einzelne TSN-Applikations-Container einen vollständigen TSN-Endgeräte-Stack mitbringen. Zudem muss der Container-Host bei Industrial Edge anstatt mit einem TSN-Stack für Endgeräte mit dem ungleich aufwändigeren TSN-Stack für Vermittlungsstellen (Switches) ausgestattet werden. Der Container-Host muss außerdem als Netzwerk-Infrastrukturgerät verwaltet werden.

Baut ein Entwickler von Industrial Edge-Applikationen seine TSN-fähigen Container-Applikationen in der gleichen Weise, in der bisherige Automatisierungsgeräte und ihre Firmware oder auch virtuelle Maschinen (VMs) entwickelt wurden, so wird das Optimierungspotenzial der Container-Technologie gegenüber der VM-Technologie verspielt. Es muss nicht nur jeder TSN-Applikations-Container mit einem kompletten TSN-Geräte-Stack ausgestattet und dieser kontinuierlich gepflegt und an Neuerungen angepasst werden, sondern der diese Container beheimatende Host - wie eine Industrial Edge - benötigt, obwohl eigentlich ein Endgerät, nun zusätzlich auch einen TSN-Switch-Software-Stack. Ein (virtueller) TSN-Switch-Stack wird hierbei erforderlich, um die Container innerhalb einer Industrial Edge mit der TSN-Schnittstelle zum Automatisierungsnetzwerk zu verbinden. Die für TSN-Switche erforderlichen Software-Stacks sind deutlich aufwändiger als Endgeräte-Stacks. Zudem bläht sich der Ressourcenbedarf für eigentlich redundante Software-Stacks beim typischen Einsatz mehrerer TSN-Applikationen massiv auf.

Applikations-Entwickler wollen nur die unbedingt zwingend erforderliche TSN-Software in ihre Container-Applikationen integrieren und pflegen müssen, nicht jedoch komplette TSN-Geräte-Stacks. Zugleich müssen ihre TSN-Applikations-Container jederzeit dynamisch (ad-hoc) TSN-Streams vom Netzwerk anfordern können, dafür benötigen sie Topologie-Informationen vom Edge-Gerät (wie den oder die Gerätezugangspunkt(e) zu TSN-Netz(en)) in möglichst einfacher Weise.

Entwickler und Architekten der Edge-Laufzeit-Plattform ("Edge OS") wollen oder müssen aus wirtschaftlichen Gründen die Software-Komplexität der Edge-Laufzeit-Software - also eines Container-Hosts - gering halten: der Einsatz eines TSN-Switch-Software-Stacks widerspricht diesem Ziel und führt zudem zu operativen Verwicklungen beim Kunden, weil ein Gerät, dass eigentlich als Endgerät im Einsatz ist, in Folge der Container-Technologie gleichzeitig zum Netzwerk-Infrastruktur-Gerät (Vermittlungsgerät, Switch, Bridge, ...) gehören würde.

Es ist eine Eigenheit der TSN-Architektur, dass die TSN-Applikationen in Endgeräten dem TSN-Netz und insbesondere einem diesen zugehörigen TSN-Netz-Controller ihren Übergabepunkt zwischen Applikation und Netz eindeutig identifizieren und signalisieren müssen. Durch das Entkoppeln der TSN-Endpunkte in Containern vom eigentlichen Netzzugangspunkt ("physikalische Netzwerkschnittstelle") eines Edge-Endgeräts ist es den TSN-Applikationen aber erst einmal grundsätzlich nicht möglich, den TSN-Netz-Controllern korrekte Übergabepunkte signalisieren zu können. Ein normaler TSN-Endgeräte-Stack in einem Container würde den internen Container-Netzzugang signalisieren, der jedoch dem Netzwerk-Controller unbekannt ist - weil ansonsten sowohl (pro Container ein eigener) ein aufwändiger TSN-Endgeräte-Stack und zusätzlich genau ein TSN-Switch-Stack nötig ist.

### Stand der Technik

Bislang wird im TSN-Umfeld davon ausgegangen, dass Container analog zu Virtuellen Maschinen (VMs) betrachtet werden können. Damit entsprechen sowohl Container als auch VMs vollwertigen TSN-Endgeräten ("TSN endstations" gemäß der IEEE 802.1), was einen entsprechenden Software-Stack für Endgeräte in jedem einzelnen Container erfordert, wie oben bereits beschrieben. Darüber hinaus wird ähnlich wie bei Virtuellen Maschinen ein virtueller TSN-Switch inklusive des dafür erforderlichen TSN-Switch Software-Stacks benötigt, nur dieses Mal im Container-Host anstatt im Hypervisor (auch Virtual-Machine-Monitor, VMM genannt). Das ist eine Klasse von Systemen, die als abstrahierende Schicht zwischen tatsächlich vorhandener Hardware (und ggf. auf dem System bereits installiertem Betriebssystem) und weiteren zu installierenden Betriebssystemen dient. Diese Systeme erlauben es, eine virtuelle Umgebung (Hardwareressourcen, insbesondere CPU, Speicher, Festplattenplatz, verfügbare Peripherie) zu definieren, die unabhängig von der tatsächlich vorhandenen Hardware als Basis für die Installation von (Gast-)Betriebssystemen dient.

Wird der Container-Host nicht direkt auf der echten Hardware ausgeführt, sondern befindet sich stattdessen in einer Virtuellen Maschine (wie beispielsweise bei einer Industrial Edge in einer Hardware-PLC / Speicherprogrammierbaren Steuerung), dann steigt der Ressourcenverbrauch weiter an, weil sowohl Hypervisor als auch Container-Host jeweils einen vollständigen TSN-Switch Software-Stack benötigen.

Es ist daher Aufgabe der Erfindung, eine technische Lösung anzugeben für containerisierte TSN-Applikationen, bei der einerseits die Applikation ohne aufwändige TSN-Stack auskommt und andererseits der jeweilige Container-Host (Industrial Edge, Cloud-Cluster-Knoten, usw.) nur als Endgerät und nicht als Netzwerk-Infrastruktur-Komponente auftritt.

Es ist außerdem Aufgabe der Erfindung, die für die Automatisierungstechnik typische Netztrennung und damit mehr als einen TSN-Netzzugang zu unterstützen und Applikations-Entwickler von den daraus resultierenden Komplikationen zu schützen.

Die Aufgabe wird gelöst durch ein Verfahren gemäß den Merkmalen den Patentanspruchs 1.

Die Aufgabe wird weiterhin gelöst durch ein Computerprogrammprodukt geeignet zur Ausführung der Schritte gemäß dem Verfahren nach Patentanspruch 1.

Das beanspruchte Verfahren ermöglicht die Konfiguration einer Applikation, die mittels eines Containers in einem Gerät zur späteren Ausführung eingebracht wird, wobei das Gerät einen Zugriffspunkt aufweist, über welchen es an ein Kommunikationsnetz angebunden ist, und der Container einen Container-Zugriffspunkt mit einer ersten Adresse aufweist.

Zu dem Container-Zugriffspunkt wird ein zugehöriger Geräte-Zugriffspunkt ermittelt mit einer zweiten Adresse ("ens33"), und zu der ersten Adresse des Container-Zugriffspunkts und der zweiten Adresse des zugehörigen Geräte-Zugriffspunkts eine dritte Adresse ermittelt wird, zu einem Industrial Automation Management Entity welche mit dem Zugriffspunkt des Gerätes über das Kommunikationsnetz verbunden ist an die Applikation übermittelt und mittels der so gewonnenen Adress-Information für die Zugriffspunkte konfiguriert so dass es für den Zugriff auf das Kommunikationsnetz über den Zugriffspunkt des Gerätes ermöglicht wird.

Die Aufgabe wird außerdem gelöst durch eine Vorrichtung gemäß den Merkmalen des Patentanspruchs 9.

Die erfindungsgemäße Vorrichtung TTIP unterstützt die Konfiguration einer Applikation in einem Gerät, das einen Zugriffspunkt aufweist, über welchen das Gerät an ein Kommunikationsnetz angebunden ist mit einer ersten Adresse ("ens33") und wobei die Applikation mittels eines Containers in dem Gerät eingebracht ist, und das Gerät bestimmt und geeignet ist zur Ausführung der Applikation als Edge-Gerät, und der Container einen Container-Zugriffspunkt mit einer zweiten Adresse ("eth0", NAP-ID) aufweist.

Dabei ermittelt die Vorrichtung (TTIP) zu dem Container-Zugriffspunkt einen zugehörigen Geräte-Zugriffspunkt ermittelt mit der ersten Adresse, und diesen speichert, und die Vorrichtung (TTIP) zu der zweiten Adresse des Container-Zugriffspunkt und der ersten Adresse des zugehörigen Geräte-Zugriffspunkt eine dritte Adresse (IP Adresse) ermittelt, zu einem TSN Domain Management Entity (TDME, ehemals Industrial Automation Management Entity IAME) welche mit dem Zugriffspunkt (NAP) des Gerätes (DEV) über das Kommunikationsnetz (T-NET)verbindbar ist. Die Vorrichtung (TTIP) übermittelt an die Applikation diese gewonnenen Adress-Informationen zur Konfiguration und um sie für den Zugriff auf das Kommunikationsnetz über den Zugriffspunkt des Gerätes zu ertüchtigen.

Weitere vorteilhafte Ausgestaltungen sind in den Unteransprüchen angegeben.

Der Container verbindet sich über seinen Container-Zugriffspunkt zunächst über ein virtuelles Vermittlungsnetz an einen virtuellen Vermittlungsknoten innerhalb des Gerätes um so die benötigten Konfigurationsdaten übermittelt zu bekommen.

Zu dem Geräte-Zugriffspunkt zugehörige Managed Object Informationen werden in einer weiteren bevorzugten Ausgestaltungsform aufgrund von bereits vorhandenen Topologie-Informationen über das Kommunikationsnetz ermittelt. Dies ist vorteilhaft, weil diese Informationen üblicherweise zur Verfügung stehen und dann nicht zusätzlich für die Konfiguration bereitgestellt werden müssen.

Das Gerät enthält gemäß einer vorteilhaften Ausgestaltungsform eine Container Engine, welche Informationen über den geräteinternen Weg vom Netzzugangspunkt bis zum Container mit der Applikation bereitstellt. Dies ist besonders vorteilhaft, wenn das erfindungsgemäße Verfahren angewendet wird mit bereits bekannten Realisierungen der Container Technologie, wie die dem Fachmann bekannten Docker. Hier ist eine Container Engine bereits vorgesehen und muss dann nur für das erfindungsgemäße Verfahren ertüchtigt werden, die gewünschten Informationen bereit zu stellen.

Das erfindungsgemäße Verfahren kann über das Kommunikationsnetz (T-NET) mittels Time-Sensitive Networking gemäß dem IEEE 802.1 Standard erfolgen. Vorteilhafte Auswirkungen werden weiter unten beschrieben.

Die Konfigurationsinformation an die Applikation kann beispielsweise mittels (einer) Environment Variablen oder auch mittels eines configuration files übertragen werden. Dieses Vorgehen erweisen sich als vorteilhaft, da hier auf bereits bekannte Mechanismen zurück gegriffen werden kann und somit die zugrunde liegende Technik nicht mehr als nötig verändert und an das erfindungsgemäße Verfahren angepasst werden muss.

### Figurenbeschreibung

Die Erfindung wird im Folgenden durch die Figuren näher erläutert, dabei zeigt
Figur 1 eine schematische Gegenüberstellung von containerisierten Applikationen gemäß dem Stand der Technik und gemäß der Erfindung,
Figur 2 einen Überblick über einen beispielhaften Aufbau der Netzelemente gemäß der Erfindung,
Figuren 3 bis 6 den Informationsfluß in dem erfindungsgemäßen Netzelement und
Figur 7 den Informationsfluß im zeitlichen Ablauf zwischen einzelnen Netzelementen gemäß Figur 2.

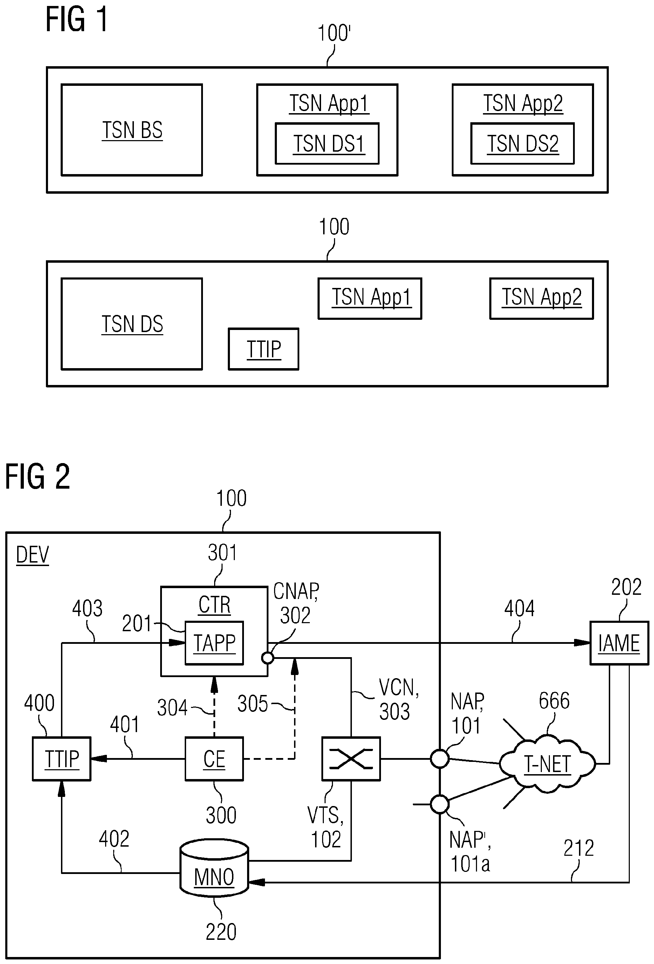

Die Figur 1 verdeutlicht den bereits oben beschriebenen vorteilhaften Unterschied zwischen dem bekannten Stand der Technik und der erfindungsgemäßen Lösung. Im oberen Kasten 101' ist eine Anordnung gemäß dem Stand der Technik dargestellt, von einem System mit zwei beispielhaften TSN Applikationen TSN Appl, TSN App2, welche, wie oben beschrieben, in derartigen Containern ausgeliefert werden. Die Anzahl der hier aufgeführten Applikationen soll dabei nicht auf zwei eingeschränkt sein, eine beliebige Anzahl ist denkbar. In jedem Container muss derzeit zusätzlich ein TSN Geräte Stack TSN DS1, TSN DS2 enthalten sein als diejenige Software, die für die Endgeräte-Control Plane von TSN zuständig ist. Das System enthält außerdem einen TSN Bridge Stack, TSN BS zur Durchführung der notwendigen Vermittlungsaufgaben, also diejenige Software, die für die Control Plane von den TSN Bridges zuständig ist.

Ein Nachteil der zuvor redundant gehaltenen Software ist dem Fachmann offensichtlich: der verwendete Code wird unnötig aufgebläht, der Installations- und Wartungsaufwand ist groß und es können sich dadurch auch Fehler (beispielsweise durch veraltete oder unterschiedliche verwendete Versionen bei den einzelnen Applikationen) einschleichen. Die Applikationen müssen weder vom gleichen Anbieter noch zur gleichen Zeit auf dem System eingespielt worden sein.

Der untere Kasten 100 zeigt nun im Vergleich die Situation, wenn gemäß der Erfindung vorgegangen wird: in den Containern der beiden TSN Applikationen TSN Appl, TSN App2 wird kein Stack benötigt, diese Container können also schlank bleiben, es reicht aus, die eigentliche Applikation zu "verpacken". Es ist ausreichend, dass der Kommunikations-Stack TSN DS einmal in dem System existiert.

In der Figur 2 ist die Erfindung mit ihren betroffenen Komponenten und den ausgetauschten Informationen detaillierter erläutert.
Die Aufgabe wird gelöst durch eine neuartige Komponente im Netz, im Folgenden auch "TSN Topology Information Provider Modul", TTIP, 400, genannt.

Die neuartige Komponente, "TSN Topology Information Provider"-Modul TTIP, bestimmt für jeden Container CTR, 301 mit TSN Applikation TAPP bei dessen Einrichten vom Container-Laufzeitsystem die ISO/OSI Layer 2-Netzwerkverschaltung, bestimmt daraus die topologische Information des zugehörigen externen Netzzugangspunkts NAP, 101, 101a des Container-Hosts und den zuständigen Industrial Automation Management Entity IAME, 202 und stellt diese Information in einer Form dem jeweiligen Container CTR, 301 bereit, so dass die darin befindliche TSN-Applikation ihrerseits nun erfolgreich TSN-Streams im TSN-Netz reservieren (anlegen) kann.

Sobald ein Container CTR, 301 mit einer TSN Applikation TAPP neu eingerichtet und vernetzt werden soll, wird die neue Komponente TTIP, 400, in den Vorgang eingebunden. Die Komponente TTIP benötigt nun (direkt oder indirekt) von der Container Engine CE, 300, Informationen, 304. 305 darüber, mit welcher TSN-Schnittstelle oder -Schnittstellen NAP, NAP' des Geräts DEV, 100 der Container mit der TSN Applikation CTR, 301 auf dem Data Link Layer (Layer 2) verbunden werden soll. Das Gerät DEV, 100 kann hierbei je nach Automatisierungsnetzwerk auch über mehr als einen NAP, NAP' 101 verfügen.

Die Zuordnung vom Container CTR (mit darin enthaltener Applikation TAPP) zur Schnittstelle NAP, NAP' kann im Fall der Industrial Edge nicht vorab durch den Applikations-Entwickler festgelegt und in seiner Applikation TAPP hinterlegt werden, da dieser weder die konkrete Zielhardware und damit deren konkreten Bezeichner der Schnittstellen (beispielsweise "ens33" oder "enp0s3", siehe dazu die Ausführungen weiter unten) noch die vom Anwender gewünschte Zuordnung zu einem oder mehreren Automatisierungsnetzwerken wissen kann.

Bekannt ist möglicherweise die "erste" oder "zweite" Schnittstelle, (also beispielsweise "ens33" oder "ens34"), aber hat der Anwender für diese Applikation nun "ens34" oder doch "ens33" ausgewählt?

Ein Container CTR, 301 wird deshalb üblicherweise erst bei seinem tatsächlichen Start mit seinem eigenen Containerlokalen Zugangspunkt CNAP, 302 (im Beispiel "eth0" oder "tsn0") über ein virtuelles Container-Netzwerk VCN, 303, mit einem virtuellen TSN-Switch VTS, 102 verbunden. Die für das spätere Verbinden des Containers CTR, 301 an ein konkretes Netzwerk notwendige Information kommt hierbei aus der Konfiguration des Geräts DEV und insbesondere der Industrial Edge Laufzeitumgebung (Runtime Environment). Der virtuellen TSN-Switch VTS, 102 ist seinerseits Geräte-intern mit dem Netzzugangspunkt NAP, 101 bzw NAP', 101a verbunden, der den jeweiligen TSN-Zugang des Geräts DEV, 100, zum externen Kommunikationsnetz TSN-Netz T-NET, 666, bildet. Es ist dabei unerheblich, ob der virtuellen TSN-Switch VTS, 102 eine eigenständige virtuelle (Software-) Komponente ist, oder aber einen Teil der Hard- und Firmware des Netzzugangspunkts NAP bildet.

Die Verwendung der neuen Komponente "TSN Topology Information Provider"-Modul TTIP, 400 ist besonders vorteilhaft bei den für die Automatisierungstechnik typischen Netztrennungen, bei denen ein einzelnes Automatisierungsgerät (und oftmals Industrial Edge-Geräte) mit mehr als einem Netzwerk zugleich verbunden ist.

Im bereits beschriebenen Fall der Industrial Edge wird durch die passende Laufzeitumgebung ("Industrial Edge Runtime" Software) als Applikations-Orchestrator in einem Gerät DEV, 100, beim Starten einer Applikation die endgültige Containerund Netz (VCN-) Konfiguration erzeugt und der Container Engine CE, 300 übergeben.

Unter Orchestrierung (englisch *orchestration,* Instrumentierung, Inszenierung) versteht man das flexible Kombinieren mehrerer Services zu einer Komposition. https://de.wikipedia.org/wiki/Dienstekomposition

Diese Informationen, zusätzlich zu der Netzwerk-Zuordnung, stehen damit auch der neuartigen Komponente, "TSN Topology Information Provider"-Modul TTIP, 400 zur Verfügung, so dass man damit den konkreten System-spezifischen Namen des Netzzugangspunkts NAP, 101 (beispielsweise in Form des Namens oder Index der betreffenden Schnittstelle / network interfaces) kennt ("ens34").

Weiterhin ermittelt das TSN Topology Information Provider"-Modul TTIP, 400 die für den Netzzugangspunkt NAP, 101 und dem dahinter liegenden Kommunikationsnetz T-NET, 666 zuständige "Industrial Automation Management Entity", IAME, 202. Dazu greift der TSN Topology Information Provider"-Modul TTIP gegebenenfalls auf die vom Betriebssystem bereitgestellten Topologie-Informationen über die Geräte-internen virtuellen Netzwerke zu, sofern bestimmte Umsetzungen einer Container Engine CE, 300 ihrerseits nicht über die vollständigen Informationen zu den virtuellen Netzwerken verfügen.

Der jeweils zuständige Industrial Automation Management Entity IAME, 202 hat sich als Teil seiner Netzwerk-Discovery den aufgefundenen Endgeräten zu erkennen gegeben, indem er mittels in TSN-Spezifikationen definierten Mechanismen (DISCovery & IFC Interface Configuration, 212) unter anderem ein sogenanntes Managed Network Object MNO, 220, mit seiner IP-Adresse setzt, beispielsweise per "netconf"-Protokoll (gemäß RFC 6241).

Das TSN Topology Information Provider"-Modul TTIP entscheidet dabei anhand der zuvor ermittelten Information 401, welches Managed Network Object MNO mit einer IAME-Adresse er konkret auslesen muss, 402: das Auswahlkriterium ist hierbei die Netzzugangspunkt NAP-Identifikation (Name, Index, ...). Mit dieser IP-Adresse kann später eine TSN- Applikation TAPP, 201 vom Industrial Automation Management Entity IAME einen oder mehrere TSN-Streams per "add stream"-Service AS, 211 reservieren bzw. anfordern.

Anschließend stellt der TSN Topology Information Provider"-Modul TTIP die Informationen zum Netzzugangspunkts NAP und Industrial Automation Management Entity IAME als Datensatz (403) der TSN-Applikation (201) im TSN-Container (301) zur Verfügung. Dieser Datensatz kann dabei beispielhaft wie folgt aussehen:
tsn:
nap: "ens34"
iame: "192.168.6.66"

Das Bereitstellen kann auf verschiedenen Wegen erfolgen, beispielsweise mittels sogenannter "environment variablen" für die im Container gestarteten Prozesse oder über eine ad-hoc in den Container eingebrachte ("gemounteten") Konfigurationsdatei mit dem Datensatz, 403.

Diese zweite Form der Bereitstellung kann auch auf Änderungen im TSN-Netz reagieren, wenn beispielsweise das relevante Managed Network Object MNO, 220 zur Laufzeit einer Applikation nachträglich geändert werden muss und ein Neustart des TSN-Containers unerwünscht ist;
die TSN Applikation TAPP, 201 kann hierzu den Datensatz (403) mit gängigen OS-Methoden zur Benachrichtigung bei Änderungen an Dateien überwachen. Zusätzlich überwacht das TSN Topology Information Provider Modul, TTIP seinerseits die betreffenden Managed Network Object MNOs, 220 auf Änderungen, 212, durch einen Industrial Automation Management Entity IAME, 202.

Eine TSN Applikation TAPP, 201 benötigt ihrerseits den Datensatz 403, um eine Kommunikationsverbindung 404 zum TSN-Stream-Service-API des Industrial Automation Management Entity IAME, 202 aufbauen zu können und danach TSN-Streams einrichten bzw. reservieren zu können. Die IP-Adresse des Industrial Automation Management Entitys, IAME wird für den Verbindungsaufbau benutzt. Die Netzzugangspunkt NAP-Identifikation wird danach als Parameter einer TSN-Stream-Reservierung AS, 211 übertragen, damit der Industrial Automation Management Entity IAME den Stream durch das Kommunikationsnetz T-NET, 666 bis zum korrekten Netzzugangspunkt NAP, 101 konfigurieren kann. Die Container Engine CE, 300 hat bereits den grundsätzlichen internen Weg vom Netzzugangspunkt NAP bis zum Container CTR in der TSN Applikation TAPP bereitgestellt, 401. Eine automatische Stream-Konfiguration des internen virtuellen TSN Switch VTS, 102 kann dabei vorgesehen sein.

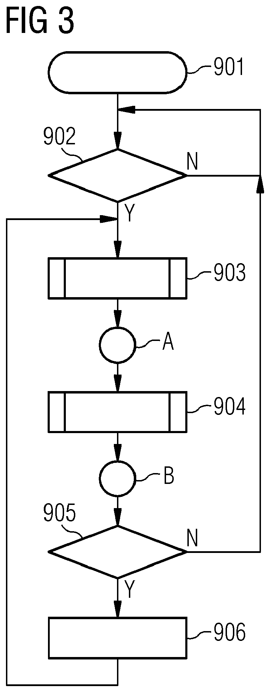

Die Figur 3 zeigt ein Verfahren, welches in dem neuartigen Modul TTIP abläuft. Ausgehend von einem Startzustand 901 wird in einem ersten Schritt geprüft, ob ein MNO mit IAME Netzadresse gesetzt oder geändert wurde, 902. Sofern dies der Fall ist, Y, wird ein einem zweiten Schritt ein (noch nicht erfasster) TSN Applikations-Container ermittelt, 903.

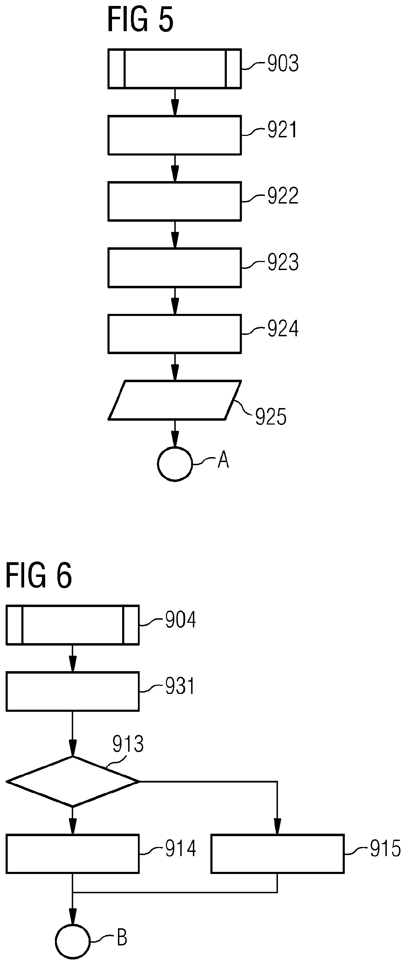

Dann wird der die für den Start des TSN Applikations-Containers erforderlichen Adress-Informationen ermittelt, 903, die hier durchgeführten Verfahrensschritte sind in Figur 5 im Einzelnen erläutert. Nach Durchlauf wird an den Ausstiegspunkt A zurückgesprungen.

Das Ergebnis nach Durchlaufen dieser Subroutine A ist eine Liste von Tupeln, die Informationen enthalten zum, Container-Zugangspunkt CNAP, dem zuständigen Netzzugangspunkt NAP und der IAME Adresse, 904. Ein Container kann dabei auch mehr als einen Zugangspunkt CNAP aufweisen, beispielsweise, wenn angeschlossene Maschinen aus vollständig getrennten TSN Netze angesprochen werden sollen, dies ist in der Figur allerdings nicht dargestellt.

In einem nächsten Schritt wird der (erste) so ermittelte neue oder geänderte TSN Applikations-Container neu gestartet oder konfiguriert, B. Die hierzu erforderlichen Schritte sind noch einmal detaillierter in der Figur 6 dargestellt.

Am Ende wird geprüft, ob es noch weitere TSN Applikations-Container gibt, im Schritt 905. Wenn dies nicht der Fall ist, N, dann wird an den Anfang der Routine zurückgesprungen und mit Schritt 902 wieder von vorne angefangen. Sollte es anderenfalls noch weitere Container geben, dann wird die Abfrage 901 übersprungen und gleich mit der ersten Subroutine 903 weiter gemacht.

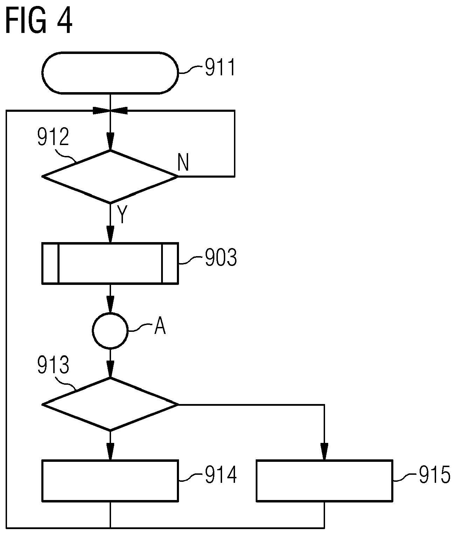

Figur 4 zeigt einen weiteren Verfahrensablauf in dem neuartigen Modul TTIP, dieser geht davon aus, dass ein neuer TSN Applikations-Container gestartet wurde oder ein (alter) Container neu gestartet wurde, 912. Wenn dies der Fall war, Y, dann wird wieder in einem weiteren Schritt der TSN Applikations-Container ermittelt, 903.

Dann wird der die für den Start des TSN Applikations-Containers erforderlichen Adress-Informationen ermittelt, 903, die hier durchgeführten Verfahrensschritte sind, wie oben erwähnt, in Figur 5 im Einzelnen erläutert. Nach Durchlauf wird an den Ausstiegspunkt A zurückgesprungen.

Im nächsten Schritt wird die so ermittelte Information (TSN Applikations-Container - IAME Tupel) publiziert 913, in dem aufgeführten Beispiel entweder als "configuration file" mit den ermittelten Tupeln (Container- Zugangspunkt CNAP, Netzzugangspunkt NAP, IAME Adresse), das geschrieben wird, siehe Schritt 914. Alternative Lösungen sind denkbar, Schritt 915, beispielsweise die Weitergabe einer Environment Variable (deutsch auch Umgebungsvariable) an das Environment des (neuen) Containers mit der TSN Applikation. https://de.wikipedia.org/wiki/Umgebungsvariable

In Figur 5 ist der Ablauf der ersten Unterroutine 903 aus den Figuren 3 und 4 dargelegt:
In einem ersten Schritt werden der oder die Container-Zugangspunkte CNAP für die TSN Applikation enthaltenden Container CTR ermittelt, in dem die Container Engine CE befragt wird, 921.

In einem zweiten Schritt wird der (jeweilige) Pfad vom Container Zugangspunkt zum verbundenen Netz-Zugangspunkt NAP ermittelt, 922.

In einem dritten Schritt wird zumindest ein zugehörige Managed Object MNO zu dem Netzzugangspunkt NAP ermittelt, 923. In einem vierten Schritt kann dann anhand des Managed Object MNO die zugehörige IAME Adresse gefunden werden, 924. Das Ergebnis ist dann das Tupel (CNAP, NAP, IAME adresse), wie oben bereits beschrieben, 925, mit dem man in die jeweiligen Routinen aus Figur 3 oder 4 wieder zurückspringen kann.

In Figur 6 ist der Ablauf der zweiten Unterroutine 904 aus den Figuren 3 und 4 dargelegt:
In einem ersten Schritt 931 wird die aus der ersten Unterroutine ermittelte Information publiziert, 913, dabei wird die configuration data überschrieben mit den neu ermittelten Informationen (CNAP, NAP, IAME Adresse), 914 und der Container CTR mit der TSN Applikation TAPP neu gestartet, 915, siehe analog zu Figur 4.

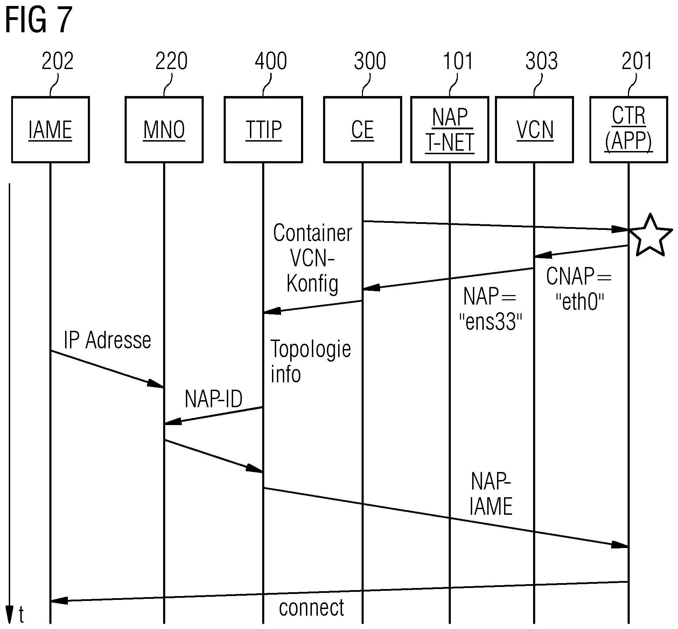

Figur 7 greift das oben beschriebene Vorgehen nochmal aus einer andere Perspektive auf und zeigt den Informationsaustausch zwischen den einzelnen Komponenten aus der Figur 2 im Ablauf der Zeit t.

Zunächst wird beispielsweise ein neuer Container CTR, 201 eingeführt (durch den Stern symbolisiert). Der Container-Zugangspunkt CNAP (heißt im Beispiel, wie oben schon beschrieben "eth0") wird an das virtuelle Container-Netzwerk VCN, 303, weitergegeben. Der zugehörige Zugangspunkt NAP, 101, des Gerätes DEV zum Kommunikationsnetz T-NET, 666 (im Beispiel "ens33" wird an die Container Engine CE, 300 weitergegeben. Diese Information wird in dem neuartigen Netzelement TTIP, 400 abgelegt.

Parallel dazu hat der IAME, 202 als Managed Object MNO die IP Adresse abgelegt, unter der er über das Kommunikationsnetz T-Net erreichbar ist (in dem Ablaufdiagramm nicht dargestellt).

Das neuartige Netzelement erkennt nun die zusammengehörigen Tupel (CNAP, NAP, IAME adresse), wie oben in den Figuren 3 bis 6 beschrieben, und gibt diese Information an den Container CTR, 201 mit der TSN Applikation TAPP weiter. Im nächsten Schritt kann sich dann die Applikation mit diesen Informationen mit dem Industrial Automation Management Entity IAME verbinden.

Das beschriebene Verfahren und die Vorrichtung ermöglichen eine vereinfachte TSN- Applikations-Entwicklung bei möglichst minimalem Software-Aufwand, so wird das Industrial-Edge-Ecosystem und hier insbesondere der Laufzeit (Runtime-) Plattform aufgewertet. Dies geschieht insbesondere dadurch, dass Entwickler von TSN- Applikationen (-Containern) davon befreit sind, vollständige TSN-Endgeräte-Stacks zu lizensieren, zu integrieren und pflegen zu müssen.

Betreiber und Entwickler von Edge-Endgeräten werden davon befreit, diese Endgeräte zusätzlich noch als Infrastrukturgeräte in Form von TSN-Switches ausrüsten (Software-Stack) zu müssen.

Betreiber von Edge-Endgeräten können diese rein als Endgeräte in ihre Kundenanlagen integrieren, anstatt zusätzlich als Netzwerk-Infrastrukturkomponente (TSN-Switch).

Vorteilhafterweise bleibt die interne virtuelle TSN-Kommunikationsstruktur vor dem TSN-Anlagennetz verborgen; so wird beispielsweise vermieden, dass das Starten und Stoppen von TSN-Applikations-Containern zu unnötigen Neuplanungsläufen von TSN-Netzwerkkontrollern oder paarweisen Aktualisierungsvorgängen zwischen einzelnen TSN-Switches führt.

Durch eine vereinfachte Entwicklung von TSN-fähigen Edge-Applikationen lassen sich diese kostengünstiger anbieten, die Einstieghürde für die Entwicklung neuer TSN-Applikationen wird so reduziert.

## Patentansprüche

1. Verfahren zur Konfiguration einer Applikation (TAPP),
wobei die Applikation mittels eines Containers (CTR) in einem Gerät (DEV) eingebracht wird, und das Gerät bestimmt und geeignet ist zur Ausführung der Applikation (TAPP) als Edge-Gerät,
das Gerät einen Zugriffspunkt (NAP) aufweist mit einer ersten Adresse ("ens33"), über welchen es an ein Kommunikationsnetz (T-NET) angebunden ist,
und der Container (CTR) einen Container-Zugriffspunkt (CNAP) mit einer zweiten Adresse ("eth0", NAP-ID) aufweist,
**dadurch gekennzeichnet, dass**
zu dem Container-Zugriffspunkt (CNAP) mit der zweiten Adresse der zugehörigen Geräte-Zugriffspunkt (NAP) ermittelt wird mit der ersten Adresse ("ens33"), und
zu der zweiten Adresse des Container-Zugriffspunkt (CNAP) und der ersten Adresse des zugehörigen Geräte-Zugriffspunkt (NAP) eine dritte Adresse (IP Adresse) ermittelt wird, zu einem Industrial Automation Management Entity (IAME) welche mit dem Zugriffspunkt (NAP) des Gerätes (DEV) über das Kommunikationsnetz (T-NET) verbunden ist und
die Applikation (TAPP) mittels der so gewonnenen Adress-Information für die Zugriffspunkte konfiguriert und für den Zugriff auf das Kommunikationsnetz (T-NET) über den Zugriffspunkt (NAP) des Gerätes (DEV) ertüchtigt wird.

2. Verfahren gemäß Patentanspruch 1,
**dadurch gekennzeichnet, dass**
der Container (CTR) über seinen Container-Zugriffspunkt (CNAP) zunächst über ein virtuelles Vermittlungsnetz (VCN) an einen virtuellen Vermittlungsknoten (VTS) innerhalb des Gerätes (DEV) verbunden wird.

3. Verfahren gemäß einem der vorherigen Patentansprüche,
**dadurch gekennzeichnet, dass**
zu dem Geräte-Zugriffspunkt (NAP) zugehörige Managed Object Informationen (MNO) aufgrund von Topologie-Informationen über das Kommunikationsnetz ermittelt wird.

4. Verfahren gemäß einem der vorherigen Patentansprüche,
**dadurch gekennzeichnet, dass**
das Gerät (DEV) eine Container Engine (CE) aufweist, welche Informationen über den geräteinternen Weg vom Netzzugangspunkt (NAP) bis zum Container (CTR) mit der Applikation (TAPP) bereitstellt.

5. Verfahren gemäß einem der vorherigen Patentansprüche,
**dadurch gekennzeichnet, dass**
die Kommunikation über das Kommunikationsnetz (T-NET) unter Verwendung des Standards Time-Sensitive Networking gemäß IEEE 802.1 erfolgt.

6. Verfahren gemäß einem der vorherigen Patentansprüche,
**dadurch gekennzeichnet, dass**
die Konfigurationsinformation an die Applikation (TAPP) mittels einer environment variablen übertragen wird (914).

7. Verfahren gemäß einem der vorherigen Patentansprüche 1 bis 5,
**dadurch gekennzeichnet, dass**
die Konfigurationsinformation an die Applikation (TAPP) mittels eines config files übertragen wird (915).

8. Computerimplementiertes Verfahren zur Durchführung der Schritte des Verfahrens gemäß einem der Patentansprüche 1 bis 7.

9. Vorrichtung (TTIP) zur Unterstützung einer Konfiguration einer Applikation (TAPP) in einem Gerät (DEV), welches einen Zugriffspunkt (NAP) aufweist, über welchen das Gerät (DEV) an ein Kommunikationsnetz (T-NET) angebunden ist mit einer ersten Adresse ("ens33"),
wobei die Applikation (TAPP) mittels eines Containers (CTR) in dem Gerät (DEV) eingebracht ist, und das Gerät bestimmt und geeignet ist zur Ausführung der Applikation (TAPP) als Edge-Gerät,
und der Container (CTR) einen Container-Zugriffspunkt (CNAP) mit einer zweiten Adresse ("eth0", NAP-ID) aufweist,
**dadurch gekennzeichnet, dass**
die Vorrichtung (TTIP) zu dem Container-Zugriffspunkt (CNAP) einen zugehörigen Geräte-Zugriffspunkt (NAP) ermittelt mit der ersten Adresse ("ens33"), und diese speichert, und
die Vorrichtung (TTIP) zu der zweiten Adresse des Container-Zugriffspunkt (CNAP) und der ersten Adresse des zugehörigen Geräte-Zugriffspunkt (NAP) eine dritte Adresse (IP Adresse) ermittelt, zu einem Industrial Automation Management Entity (IAME) welche mit dem Zugriffspunkt (NAP) des Gerätes (DEV) über das Kommunikationsnetz (T-NET)verbindbar ist und
die Vorrichtung (TTIP) an die Applikation (TAPP) diese gewonnenen Adress-Information zur Konfiguration übermittelt und für den Zugriff auf das Kommunikationsnetz (T-NETZ) über den Zugriffspunkt (NAP) des Gerätes (DEV) ertüchtigt.

10. Vorrichtung gemäß Patentanspruch 9,
**dadurch gekennzeichnet, dass**
die Vorrichtung (TTIP) auf den Container (CTR) über seinen Container-Zugriffspunkt (CNAP) zunächst über ein virtuelles Vermittlungsnetz (VCN) an einen virtuellen Vermittlungsknoten (VTS) innerhalb des Gerätes (DEV) zugreift.

11. Vorrichtung gemäß einem der vorherigen Patentansprüche 9 oder 10,
**dadurch gekennzeichnet, dass**
die Vorrichtung (TTIP) Adressinformationen zu dem Geräte-Zugriffspunkt (NAP) abfragt von zugehörigen Managed Object Informationen (MNO), welche aufgrund von Topologie-Informationen über das Kommunikationsnetz ermittelt wurden.

12. Vorrichtung gemäß einem der vorherigen Patentansprüche 9 bis 11,
**dadurch gekennzeichnet, dass**
die Vorrichtung Zugriff Informationen über den geräteinternen Weg vom Netzzugangspunkt (NAP) bis zum Container (CTR) mit der Applikation (TAPP) abfragt von einer Container Engine (CE) .

13. Vorrichtung gemäß einem der vorherigen Patentansprüche 9 bis 12,
**dadurch gekennzeichnet, dass**
die Kommunikation über das Kommunikationsnetz (T-NET) unter Verwendung des Standards Time-Sensitive Networking gemäß IEEE 802.1 erfolgt.

14. Verfahren gemäß einem der vorherigen Patentansprüche 9 bis 13,
**dadurch gekennzeichnet, dass**
die Vorrichtung (TTIP) die Konfigurationsinformation an die Applikation (TAPP) mittels einer environment variablen überträgt.

15. Verfahren gemäß einem der vorherigen Patentansprüche 9 bis 13,
**dadurch gekennzeichnet, dass**
die Vorrichtung (TTIP) die Konfigurationsinformation an die Applikation (TAPP) mittels eines config files überträgt.
